(19) Europäisches Patentamt
European Patent Office
Office européen des brevets

(11) Veröffentlichungsnummer: **0 355 510 B1**

(12) **EUROPÄISCHE PATENTSCHRIFT**

(45) Veröffentlichungstag der Patentschrift: **24.11.93**

(51) Int. Cl.$^5$: **C08L 77/00**, C08L 25/00, C08L 33/00, C08K 7/00

(21) Anmeldenummer: **89114309.1**

(22) Anmeldetag: **03.08.89**

(54) **Verstärkte/gefüllte Blends aus thermoplastischen Interpolymeren und Polyamiden, und ein Verfahren zu ihrer Herstellung.**

(30) Priorität: **16.08.88 DE 3827668**

(43) Veröffentlichungstag der Anmeldung:
**28.02.90 Patentblatt 90/09**

(45) Bekanntmachung des Hinweises auf die Patenterteilung:
**24.11.93 Patentblatt 93/47**

(84) Benannte Vertragsstaaten:
**BE CH DE ES FR GB IT LI NL**

(56) Entgegenhaltungen:
**EP-A- 0 096 264**
**EP-A- 0 283 871**
**US-A- 3 496 985**
**US-A- 4 495 324**

(73) Patentinhaber: **BAYER AG**

**D-51368 Leverkusen(DE)**

(72) Erfinder: **Westeppe, Uwe, Dr.**
**Vogelskamp 72**
**D-4020 Mettmann(DE)**
Erfinder: **Lindner, Christian, Dr.**
**Im Wasserblech 11**
**D-5000 Köln 91(DE)**
Erfinder: **Piejko, Karl-Erwin, Dr.**
**Unterscheider Weg 7a**
**D-5060 Bergisch-Gladbach 2(DE)**
Erfinder: **Laue, Hans-Joachim, Dr.**
**Roggendorfstrasse 49**
**D-5000 Köln 80(DE)**

**EP 0 355 510 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen aus (mit z.B. Glasfasern) verstärkten und/oder (mit z.B. Kaolin) gefüllten Polyamiden, Interpolymeren bestimmter chemischer Zusammensetzung (aus Polyamiden und thermoplastischen Copolymerisaten) und gegebenenfalls einem, die Zähigkeit der Formmassen erhöhenden Kautschukmodifikator und ein Verfahren zu ihrer Herstellung.

Aus JA 62/149 749 sind Abmischungen aus Polyamid, einem Styrolpolymerisat, anorganischem Füllstoff und eines thermoplastischen, elastomeren Copolymeren mit -COO-Gruppierungen bekannt. In JA 63/015 845 werden Formmassen aus 10 bis 85 Gew.-% Polyamid, 10 bis 60 Gew.-% Füllstoff und 3 bis 30 Gew.-% eines Block/Pfropfpolymeren von Vinylaromaten und konjugierten Dienen beansprucht.

Die eigene, unveröffentlichte deutsche Patentanmeldung P 37 09 599.4 (Le A 24 976) beansprucht Formmassen aus einem thermoplastischen Polyamid, einem thermoplastischen Harzcopolymer und gegebenenfalls ein die Schlagzähigkeit der Formmasse erhöhendes Kautschukpolymerisat. Außerdem können die Formmassen (vgl. S. 18) Füll- und Verstärkungsstoffe enthalten. Stellt man aus den in Le A 24 976 genannten Edukten und Glasfasern Compounds her, so beobachtet man eine deutliche Verfärbung der Formmassen, die zudem im Vergleich zu glasfasermodifiziertem Polyamid deutlich reduzierte Zähigkeit aufweisen (vgl. Vergleichsversuche).

Technische Aufgabe war es mithin, thermoplastische Formmassen mit verbesserter Eigenfarbe und Zähigkeit zugänglich zu machen, die aber weiterhin die vorteilhaften Eigenschaften der in P 37 09 599.4 (Le A 24 976) beschriebenen Formmassen (glatte Oberflächen, red. Wasseraufnahme, gute Steifigkeit und Zähigkeit) aufweisen.

Die Aufgabe wird dadurch gelöst, daß man Interpolymere bestimmter chemischer Zusammensetzung mit verstärktem und/oder und/oder gefülltem Polyamid vermischt und thermoplastisch zu Formkörpern verarbeitet. Eine bevorzugte Ausführungsform der Erfindung besteht darin, die beiden Komponenten in Granulatform zu mischen und das Granulatgemisch zu Formkörpern zu verspritzen.

Die Interpolymere sind in der gleichzeitig eingereichten deutschen Patentanmeldung P 3 827 669.0, (Le A 25 958) beschrieben.

Die Interpolymere D) stellen dabei Kombinationsprodukte aus Polyamiden A) und Copolymerisaten B) mit einpolymerisierten, tertiäre Estergruppen enthaltenden Monomeren dar, die sich durch physikalische Methoden wie Fraktionierung mit Lösungsmitteln etc. nicht mehr vollständig in die reinen Komponenten A) und B) (Edukte) zerlegen lassen, d.h. daß zumindest eine teilweise chemische Verknüpfung zwischen den Komponenten A) und B) besteht (sog. Interpolymerbildung).

Gegenstand der Erfindung sind Füllstoff- und/oder Verstärkungsstoffe enthaltende, thermoplastische Formmassen mit verbesserter Oberfläche und verbesserten mechanischen oder elektrischen Eigenschaften aus

A) mindestens 10 Gew.-%, vorzugsweise mindestens 20 Gew.-%, insbesondere 25 bis 75 Gew.-% Polyamid A) welches 10 bis 65 Gew.-%, bevorzugt 15 bis 60 Gew.-% bezogen auf das Polyamid A) an Füll- und/oder Verstärkungsstoffen E) enthält,

D) 10 bis 60 Gew.-%, bevorzugt 20 bis 60 Gew.-% Interpolymer D) sowie

C) 0 bis 30 Gew.-%, bevorzugt 5 bis 20 Gew.-%, insbesondere 5 bis 15 Gew.-%, bezogen auf die Summe (A + C + D), an Kautschukpolymerisaten als schlagzähe Modifikatoren,

wobei die Interpolymere D) aus

A) 40 bis 80 Gew.-%, bevorzugt 50 bis 75 Gew.-% teilkristallinen und/oder amorphen Polyamiden und

B) 20 bis 60 Gew.-%, bevorzugt 25 bis 50 Gew.-% thermoplastischen Copolymerisaten oder Gemischen aus mehreren thermoplastischen Copolymerisaten aus

B1) mindestens 15 Gew.-%, bevorzugt mindestens 30 Gew.-%, insbesondere mindestens 45 Gew.-%, wenigstens einem Monomer aus der Reihe

B1.1) der Styrole und α-Methylstyrole, die auch alkyl-, halogenalkyl-und/oder halogensubstituiert sein können

und gegebenenfalls

B1.2) 0 bis 50 Gew.-%, bevorzugt 10 bis 50 Gew.-%, insbesondere 20 bis 40 Gew.-% an weiteren Monomeren aus der Reihe Acrylnitril, Methacrylnitril, der Vinyl-$C_1$-$C_4$-carbonsäuren und ester der Acryl- oder Methacrylsäuren mit primären oder sekundären $C_1$-$C_{10}$-Alkoholen,

und

B2) 0,5 bis 35 Gew.-%, bevorzugt 1 bis 20 Gew.-%, insbesondere 1,5 bis 15 Gew.-%, wenigstens einem Ester der Acryl- oder Methacrylsäure mit tertiären $C_4$-$C_{10}$-Alkoholen in Mengen bis zu 35 Gew.-% B2) im Copolymerisat B),

hergestellt durch Homogenisieren der Komponenten A) und B) in der Schmelze in üblichen Misch- oder

Knetorganen bei Temperaturen oberhalb des Schmelzpunktes der höherschmelzenden Komponente bis zur Bildung der Interpolymeren, bestehen.

Die Herstellung der Interpolymeren D) erfolgt durch Homogenisieren der Komponenten A) und B) in der Schmelze bei Temperaturen oberhalb des Schmelzpunktes der höherschmelzenden Komponente, z.B. in üblichen Misch- oder Knetwerkzeugen wie Extrudern, Banbury-Mischern o.ä., wobei während der Mischung die Bildung der Interpolymeren D) unter chemischer Verknüpfung der Komponenten A und B erfolgt. Die genaue Struktur der gebildeten Produkte ist z.Z. noch unbekannt. Polymeranalytische Untersuchungen zeigen jedoch, daß Interpolymere vorliegen, da sie sich nicht mehr vollständig in ihre Ausgangsprodukte zerlegen lassen. Die mittlere Verweilzeit in der Schmelze bis zur Bildung der Interpolymere kann umso kürzer sein, je höher die Schmelztemperatur ist. Die mittlere Verweilzeit beträgt mindestens 0,5 Minuten, vorzugsweise 1 bis 3 Minuten. Die Schmelzetemperatur oberhalb der Schmelztemperatur der höherschmelzenden Komponente ist im allgemeinen von derjenigen Temperatur begrenzt, bei der merkliche Abbauerscheinungen eintreten. Die Verweilzeit wird - abgesehen von den apparativen Gegebenheiten - von der homogenen Vermischung und einer ausreichenden Interpolymerbildung bestimmt. Die Mindestverweilzeit nimmt dabei im allgemeinen mit steigendem Gehalt an Komponente B2) im Copolymerisat B ab.

## Polyamide A

Als Polyamid-Komponente A) der erfindungsgemäßen Interpolymere D) bzw. Formmassen eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäuren besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin und/oder Tetramethylendiamin bestehen, und deren Zusammensetzungen aus dem Stand der Technik bekannt sind.

Außerdem sind teilkristalline Polyamide zu nennen, die ganz oder teilweise aus Lactamen mit 6 bis 12 C-Atomen im Ring, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6 oder Copolyamide mit nur geringen Anteilen (bis etwa 10 Gew.-%) der Cokomponenten.

Es können als Polyamidkomponente A) auch amorphe Polyamide eingesetzt werden. Sie werden erhalten durch Polykondensation von Diaminen, beispielsweise Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, oder Gemischen aus 4,4'- oder 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5-trimethyl-cyclohexylamin, 2,5- und/oder 2,6-Bis-(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sich auch amorphe Copolymere, die durch Polykondensation mehrerer Monomere erhalten werden, geeignet, ferner solche Copolymere, die unter Zusatz von Aminocarbonsäuren wie ω-Aminocapronsäure, ω-Aminoundecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan; oder aus Isophthalsäure, 4,4'-Diamino-di-cyclohexylmethan und ω-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammen setzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren

und gegebenenfalls entsprechend höherkondensierten Diaminen, die durch Hydrierung von Diaminodiphenylmethan technischer Qualität erhalten werden.

Die Polyamide A) können auch aus Mischungen von teilkristallinen und amorphen Polyamiden bestehen, wobei vorzugsweise der amorphe Polyamidanteil unter dem teilkristallinen Polyamidanteil liegt.

Bevorzugt sind teilkristalline Polyamide aus Basis Polyamid-6, Polyamid-66 und teilkristalline Polyamide auf Basis dieser Hauptkomponenten unter Zusatz von Cokomponenten der erwähnten Art.

Die Polyamide A) sollen vorzugsweise eine relative Viskosität (gemessen an einer 1 gew.-%igen Lösung in m-Kresol bei 25 °C) von 2,0 bis 5,0, vorzugsweise von 2,5 bis 4,0, aufweisen.

Füll- und/oder Verstärkungsstoffe E)

Als anorganische Füll- und/oder Verstärkungsmaterialien E) für die Polyamide A eignen sich eine Vielzahl von bekannten Stoffen mit verschiedener chemischer Zusammensetzung und verschiedenen Teilchenformen bzw. Teilchengeometrien.

So können die Teilchen überwiegend die Gestalt von Kugeln, Würfeln, Quadern, Plättchen und insbesondere von Fasern haben. Eine diesbezügliche Übersicht findet sich in Kunststoffe 73, 511 ff. (1983).

Ihrer chemischen Natur nach sind die anorganischen Verstärkungsstoffe überwiegend Carbonate, vorzugsweise $CaCO_3$ (Kreide, Dolomit, Calcit, Amolit), Silicate (Asbest, Kaolin, Talcum, Glimmer, Quarz, Wollastonit) oder Metalloxide (Aluminiumoxid/Aluminiumhydroxid, Tonerde), gegebenenfalls auch Metallpulver (z.B. Aluminium, Stahl, Kupfer).

Die Teilchengröße der Verstärkungsstoffe ist in weiten Bereichen variabel; die anorganischen verstärkungsstoffe können nachbehandelt sein, z.B. um eine bessere Haftung zur Polyamidmatrix zu haben.

Die genannten Vertreter der anorganischen Verstärkungsstoffe können allein oder in Kombination von mehreren in den verstärkten Polyamiden enthalten sein.

Besonders bevorzugt werden Glasfasern, Glaskugeln (massive und Hohlkugeln), Kreide, Kaolin, Talk und/oder Wollastonit verwendet.

E) kann vorzugsweise in einem Arbeitsgang in die Polyamide A eingearbeitet werden.

Die Menge an E) beträgt im allgemeinen 3 bis 60 Gew.-%, vorzugsweise aber 10 bis 60, insbesondere 15 bis 50 Gew.-%.

Thermoplastische Copolymerisate B)

Thermoplastische Copolymerisate B), die im Sinne der Erfindung mit den Polyamiden A) zu den Interpolymeren D) umgesetzt werden, sind Copolymere aus

B1) wenigstens einem Monomer aus der Reihe der Styrole, der α-Methylstyrole, Acrylnitril, Methacrylnitril, der Vinyl-$C_1$-$C_4$-carbonsäuren, Ester der Acryl- oder Methacrylsäure mit primären oder sekundären $C_1$-$C_{10}$-Alkoholen, wobei Styrole oder α-Methylstyrole bevorzugt als Monomere B1) enthalten sein sollen, und

B2) wenigstens einem Ester der Acryl- oder Methacrylsäure mit tertiären $C_4$-$C_{10}$-Alkoholen, in Mengen bis zu 35 Gew.-% B2) im Copolymer B).

Bevorzugte Monomere B1) als Monomerbausteine der Copolymere B) sind Styrol, α-Methylstyrol einerseits und als weitere Monomere Acrylnitril, Methylmethacrylat, n-Butylmethacrylat, Cyclohexylmethacrylat und Vinylacetat, besonders bevorzugt sind Styrol, α-Methylstyrol sowie Acrylnitril und Methylmethacrylat. Die Styrole und α-Methylstyrole können dabei am aromatischen Ring alkyl-, halogenalkyl- oder halogensubstituiert, z.B. durch $C_1$-$C_3$-Alkyl-, halogenhaltige ($C_1$-C3)-Alkyl- und/oder Halogengruppen substituiert sein, bevorzugt jedoch sind Styrol und α-Methylstyrol.

Monomere B2) im Sinne der Erfindung sind tertiäre (Meth)Acrylsäureester und besitzen die allgemeine Formel

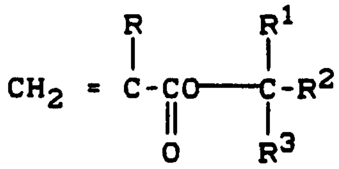

mit R = H, $CH_3$ und

$R^1$, $R^2$, $R^3$ = Alkyl, so daß die Summe der C-Atome in $R^1$, $R^2$ und $R^3$ 3 bis 9 beträgt.

Besonders bevorzugte Monomere B2) sind tert.-Butylacrylat, tert.-Butylmethacrylat, tert.-Pentylmethacrylat und tert.-Hexylacrylat, sowie gegebenenfalls tert.-Octyl(meth)acrylate.

Die Copolymere B) stellen Copolymere aus wenigstens zwei verschiedenen Monomeren dar. Sie können auch als Gemische eingesetzt werden. Besonders im Sinne der Erfindung geeignete Komponenten B) bestehen aus wenigstens zwei verschiedenen Monomeren B1) und wenigstens einem Monomer B2), wie z.B. Terpolymere aus zwei Komponenten B1), wie z.B. α-Methylstyrol, Styrol, Methylmethacrylat und Acrylnitril, in Kombination mit tert.-Butyl(meth)acrylat als Monomerkomponente B2).

Die Copolymere B) enthalten bis zu 35 Gew.-% (effektiv 0,5 bis 35 Gew.-%), bevorzugt bis zu 20 Gew.-%, eingebaute Monomere B2), insbesondere 1 bis 20 Gew.-%, ganz besonders bevorzugt 1,5 bis 15 Gew.-% an B2).

Besonders vorteilhaft sind Terpolymerisate aus Styrol/-Acrylnitril/tert.-Butyl(meth)acrylat, α-Methylstyrol/-Acrylnitril/tert.-Butyl(meth)acrylat, insbesondere solche Terpolymerisate aus Styrol/Acrylnitril/tert.-Butyl(meth)acrylat, bei denen dieses Terpolymerisat aus 35 bis 89 Gew.-%, bevorzugt 45 bis 78,5 Gew.-% Styrol und/oder α-Methylstyrol und 10 bis 50 Gew.-%, bevorzugt 20 bis 45 Gew.-%, Acrylnitril, sowie 1 bis 15 Gew.-%, bevorzugt 1,5 bis 10 Gew.-%, tert.-Butyl(meth)acrylat besteht (Gew.-% bezogen auf die Summe der Komponenten B).

Die Herstellung der Polymere B) kann nach dem Verfahren der Copolymerisation in Lösung, Masse, Suspension, Dispersion sowie Emulsion durch radikalische oder thermische Polymerisationsverfahren in an sich bekannter Weise erfolgen.

Besonders im Sinne der Erfindung geeignete Copolymere B) lassen sich durch wäßrige Emulsionspolymerisation erzeugen. Dabei werden die Monomere B1) und B2) vorteilhaft unter Mitverwendung anionischer Emulgatoren copolymerisiert. Zu besonders geeigneten Harzen B) gelangt man dann, wenn man mittels anionischer Emulgatoren vom Typ der Carbonsäuresalze polymerisiert, wie z.B. Salzen der Ölsäure, Stearinsäure, Harzsäure, Abietinsäure sowie deren disproportionierten Derivaten. Diese Emulgatoren werden zur Herstellung der Harze in den üblichen Mengen, vorzugsweise in Mengen bis zu 3 Gew.-%, bezogen auf die Summe der Monomere B1) und B2), eingesetzt.

Die Polymerisation zu B) erfolgt normalerweise bei mehr als 50 °C, insbesondere bei 60 bis 100 °C, sie kann batchweise, teilkontinuierlich oder vollkontinuierlich erfolgen.

Die Initiierung der Copolymerisation erfolgt thermisch oder mittels Radikalbildnern wie z.B. Persulfat, Perphosphat, Hydroperoxid, Azoverbindungen sowie gegebenenfalls auch durch sogenannte Redoxinitiierung; bevorzugt sind anorganische, wasserlösliche Initiatoren geeignet.

Das Molekulargewicht der Copolymere B) kann in an sich bekannter Weise durch verschiedenste Maßnahmen variiert werden, wie z.B. Temperatur, Monomerkonzentration, Startermenge oder durch Einsatz sogenannter Regler, wie z.B. von Organoschwefel-Verbindungen wie Mercaptane und Disulfide, wobei langkettige Mercaptane, z.B. n- und tert.-Dodecylmercaptan vorteilhaft sind. Die Regler werden normalerweise im Monomergemisch gelöst und die Mischung danach polymerisiert.

Besonders vorteilhafte erfindungsgemäße Interpolymere werden dann erhalten, wenn B) bestimmte Molekulargewichte aufweist, d.h. die Grenzviskositäten ($\eta$), gemessen in dl/g bei Raumtemperatur in DMF, vorzugsweise im Bereich von 0,2 bis 2, insbesondere aber im Bereich von 0,3 bis 1,5 liegen.

Komponente C) (Schlagzäh-Modifikatoren)

Gegebenenfalls als weitere Komponente können die erfindungsgemäßen Formmassen als Komponente C) ein die Schlagzähigkeit der Formmassen erhöhendes Kautschukpolymerisat enthalten.

Bevorzugte Formmassen enthalten bis zu 30, z.B. 1 bis 20, insbesondere 5 bis 15 Gew.-% der Komponente C), bezogen auf die Summe A) + C) + D). Die Komponente C) stellt ein Kautschukpolymerisat dar und enthält oder ist ein Kautschukpolymerisat mit Einfriertemperaturen (Glastemperaturen) kleiner 0 °C, insbesondere kleiner -20 °C. Es kann aus der Reihe der Homo-, Co- oder Pfropfpolymerisate auf der Basis von Dienmonomer-, Olefin- oder Acrylatkautschuken ausgewählt werden, die unvernetzt, insbesondere teilvernetzt oder hochvernetzt sein können. Die Komponente C) is aus den an sich bekannten Kautschukpolymerisaten auszuwählen, die zur Verbesserung der Eigenschaften, insbesondere zur Schlagzähverbesserung von thermoplastischen Polyamiden üblicherweise verwendet werden.

Typische Vertreter dieser Klasse sind z.B: Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie Dienmonomer/Acrylnitril/Copolymerkautschuke, Dienpolymer/Vinylarylpolymer-Blockpolymere wie Styrol-Butadien-Blockcopolymere.

Weiterhin geeignete Komponenten C) können Olefinkautschuke mit sauren Gruppen sein. Vorteilhafter kann besonders jedoch der Einsatz von Carboxylgruppen enthaltenden Terpolymerisaten aus Ethylen, (Meth)acrylsäure sowie Butylacrylat sein.

Erfindungsgemäß als Komponente C) geeignet können auch kautschukartige Copolymerisate aus Ethylen-Vinylacetat- und Ethylen-(Meth)acrylsäurealkylester-Copolymeren sein. Geeignet als Komponente C) sind auch die in der GB-PS 1 284 489 beschriebenen Ethylencopolymeren mit Aminoacrylatmonomeren. Weiterhin lassen sich auch Interpolymere aus Olefinen, Acrylaten und säurefunktionellen oder latent säurefunktionellen Monomeren wie z.B. (Meth)acrylsäure oder Maleinsäureanhydrid verwenden.

Besonders geeignete Komponenten C) im Sinne der Erfindung sind kautschukartige Pfropfpolymerisate, beispielsweise Propfpolymerisate aus $\alpha$-Olefin-Polymerisaten und Carbonsäure- und/oder Ester-Pfropfmonomeren, wobei als Pfropfgrundlagen Copolymere oder Homopolymere aus Ethylen, Propylen und Buten(1) geeignet sind. Geeignete Pfropfpolymerisate sind auch die aus den Patentanmeldungen DE-A 2 622 876, EP-B 13 941, DE-A 2 622 973, DE-A 2 401 149 und EP-B 9757 bekannten Poly-$\alpha$-olefinkautschuk-Maleinsäureanhydrid-Addukte, die gemäß DE-A 3 335 706 bekannten Umsetzungsprodukte aus Ethylen-Copolymeren mit Maleinsäureanhydrid und Dialkylestern der Malein- bzw. Fumarsäure, die gemäß FR-PS 1 568 637 mit ungesättigten Säuren gepfropften Polyolefinkautschuke (GB-PS 998 439), sowie die z.B. in der DE-A 2 622 973 beschriebenen Maleinsäure-gepfropften EPDM-Kautschuke.

Vorteilhaft geeignet sind auch Pfropfpolymerisate, die durch Aufpfropfen von Styrolmonomeren und Acrylnitril auf ein Kautschukpolymerisat, dessen Glastemperatur unter 0 °C, vorzugsweise unter -20 °C, liegt, entstehen; Kautschukpolymerisate sind dann beispielsweise Polybutadien, Butadien-Acrylester-Copolymere z.B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Die Herstellung derartiger kautschukmodifizierter Copolymerisate ist bekannt (z.B. aus JA 48 850 oder US-PS 4 217 424.

Als Komponenten C) sind auch die gemäß DE-A 2 906 222 bekannten Pfropfpolymerisate aus Styrol und Acrylnitril auf Polybutadien oder Copolymerisaten aus Butadien und $\alpha,\beta$-ungesättigten Monomeren, wie beispielsweise Styrol, Acrylnitril, niedere Alkylester der Acryl- oder Methacrylsäure, sowie die bekannten bepfropften Acrylatkautschuke geeignet.

Vorteilhaft geeignet sind auch die z.B. in der DE-A 3 200 070 beschriebenen mehrphasigen Polymere aus einem stark vernetzten Dienkautschuk als Kern, mit einer ersten Hülle aus vernetztem Acrylatkautschuk (Kautschuk mit Kern/Mantelstruktur) und einer zweiten Hülle aus einem Polymerisat oder Copolymerisat aus harzbildenden Monomeren aus der Reihe Styrol, Acrylnitril, Methacrylnitril, Methacrylsäureester oder Mischungen daraus.

Geeignet sind auch die in EP-A 0 134 937 beschriebenen gepfropften, partiell vernetzten Dien- und/oder Acrylatkautschuke, sowie die gemäß DE-A 2 758 615 aus einem vernetzten Kautschuk als Pfropfgrundlage hergestellten Pfropfprodukte. Bevorzugt werden dabei Kautschuke auf Basis Polybutadien und/oder Polyisopren, die bis zu 40, vorzugsweise bis 10 Gew.-% Styrol und/oder Acrylnitril und/oder Ester der Acrylsäure als Comonomer enthalten können. Mögliche Pfropfmonomere können sein: Acrylnitril, Methacrylnitril, aliphatische Ester und Amide der Acrylsäure und Methacrylsäure mit bis zu 22 C-Atomen.

Die bevorzugt geeigneten, auf die Kautschukgrundlagen aufgepfropften Monomere sind Alkylmethacrylat, Styrol, Acrylnitril, Alkylacrylat, Acrylamide, Acrylsäure, Methacrylsäure, insbesondere Methylmethacrylat sowie Kombinationen aus Methylmethacrylat und Alkylacrylaten, gegebenenfalls in kleinen 0,2 bis 5 Gew.-% Anteilen ungesättigte Carbonsäuren wie (Meth)acrylsäure enthaltend.

Die erfindungsgemäßen Formmassen können übliche Additive, wie Gleit- und Entformungsmittel, Nukleierungsmittel, Stabilisatoren, Flammschutzmittel, Farbstoffe sowie Thermostabilisatoren, Antioxidantien und/oder Lichtschutzmittel in üblichen wirksamen Mengen, enthalten.

Die Herstellung der Formmassen kann durch Vermischen der Komponenten (vorzugsweise als Granulate) in üblichen Mischaggregaten, wie Walzen, Knetern, Ein- oder Mehrwellenextrudern, erfolgen.

Die nicht vorveröffentlichte EP-A-0 283 871 beschreibt Abmischungen aus Polyamiden A), tert.-Estern von bestimmten Polymerisaten (Komponente B), sowie gegebenenfalls Schalgzähmodifikatoren C) mit Füll- und Verstärkungsstoffen. Im Vergleich zu diesem Vorschlag besteht die vorliegende Erfindung darin, die Polyamidkomponente A), welche Füll- und/oder Verstärkungsstoffe E) enthält, mit einem vorgebildeten Interpolymer D) und gegebenenfalls Kautschukkomponente C) zu vermischen und dann zu Formkörpern zu verarbeiten. Eine besonders bevorzugte Ausführungsform besteht darin, die Mischung der Komponenten A), D) und gegebenenfalls C) gut zu homogenisieren und sofort, ohne weitere Compoundierung, zu Formkörpern zu verspritzen. Insbesondere die nach diesem besonders bevorzugten Verfahren hergestellten Formkörper zeichnen sich durch sehr gute Zähigkeiten und gute elektrische Eigenschaften aus.

Die Temperatur bei der Herstellung der Mischungen sollte mindestens 10 °C und zweckmäßig höchstens 80 °C oberhalb des höchsten Schmelzpunktes, bzw. Erweichungspunktes der Komponenten A, B oder C liegen. Entsprechend dem Eigenschaftsbild eignen sich die erfindungsgemäßen Formmassen überall im Spritzguß- und Extrusionssektor dort, wo die beschriebenen Eigenschaften gefordert werden, wie z.B. als Gehäusematerial für Elektrogeräte, im Kfz-Bereich für Radkappen.

Beispiele

Verwendete Komponenten:

A. Polyamid

A1. Polyamid 6 mit einer relativen Viskosität (gemessen an einer 1 gew.-%igen Lösung in m-Kresol bei 25 °C) von 3,0.

A2. Polyamid 6, mit einer relativen Viskosität (gemessen wan einer 1 gew.-%igen Lösung in m-Kresol bei 25 °C von 3,0 und einem Glasfasergehalt von 50 Gew.-%)

B. Thermoplastische Harzpolymere (Komponente B)

Vergleichsbeispiel B/A

In einem 10 l Rührgefäß wird eine Lösung aus 3.723 g Wasser, 83 g-Teilen Na-Salz der disproportionierten Abietinsäure und 43 g-Teile 1n-Natronlauge vorgelegt. Nach Verdrängen der Luft durch Stickstoff und Einstellung der Innentemperatur auf 75 °C werden 7 g-Teile Kaliumperoxodisulfat und 358 g-Teile Wasser zugesetzt. Anschließend werden 1.610 g-Teile α-Methylstyrol, 723 g-Teile Acrylnitril und 2 Gew.-Teile t-Dodecylmercaptan innerhalb von 6 h bei 75 °C zudosiert. Direkt nach Abschluß der Zudosierung werden 1,2 g Kaliumperoxodisulfat gelöst in 46,7 g Wasser, zugesetzt und weitere 4 h bei 75 °C gerührt.

Der erhaltene α-Methylstyrol-Acrylnitrilcopolymer-Latex wird durch Zusatz von 1,2 Gew.-%, bezogen auf Polymerfeststoff, phenolischer Antioxidantien stabilisiert. Danach wird der Latex bei 85 bis 95 °C mit einer wäßrigen Lösung von $MgSO_4$ (Bittersalz) und Essigsäure bei pH 4 bis 5 koaguliert, filtriert, elektrolytfrei gewaschen und bei 60 °C getrocknet.

Beispiele B1 bis B3

In einem 10 l Rührgefäß werden die in Tabelle 1 angegebenen Mengen Wasser, Na-Salz der disproportionierten Abietinsäure und 1 n NaOH vorgelegt. Nach Verdrängen der Luft durch Stickstoff und Erwärmen auf 75 °C werden die jeweils angegebenen Mengen α-Methylstyrol, Acrylnitril, t-Butylacrylat sowie t-Dodecylmercaptan innerhalb von 6 h bei 75 °C zudosiert. Nach Abschluß der Zudosierung werden sofort 1,2 g Kaliumperoxodisulfat gelöst in 46,7 g Wasser zugesetzt und weitere 4 h bei 75 °C gerührt.

Die erhaltenen Terpolymer-Latices werden jeweils durch Zusatz von 1,2 Gew.-%, bezogen auf Polymerfeststoff, phenolischer Antioxidantien stabilisiert. Die Latices werden anschließend bei 85 bis 95 °C mit einer wäßrigen Lösung von $MgSO_4$ (Bittersalz) und Essigsäure bei pH 4 bis 5 koaguliert, filtriert, elektrolytfrei gewaschen und bei 60 °C getrocknet.

**Tabelle 1**

Herstellung der erfindungsgemäß zur Bildung der Interpolymeren D) eingesetzten thermoplastischen Harzpolymeren B) auf Basis α-Methylstyrol/Acrylnitril/t-Butylacrylat

| Beispiele | | Vergleichsbeispiel BA | Beispiele: B1 | B2 | B3 |
|---|---|---|---|---|---|
| Vorlage | | | | | |
| Wasser | Gew.-Teile | 3.723 | 3.723 | 3.723 | 3.723 |
| Emulgator* | Gew.-Teile | 83 | 83 | 83 | 83 |
| 1 n NaOH | Gew.-Teile | 43 | 43 | 43 | 43 |
| Kaliumperoxodisulfat | Gew.-Teile | 7 | 7 | 7 | 7 |
| Wasser | Gew.-Teile | 358 | 358 | 358 | 358 |
| Zulauf | | | | | |
| α-Methylstyrol | Gew.-Teile | 1.610 | 1.575 | 1.540 | 1.540 |
| Acrylnitril | Gew.-Teile | 723 | 723 | 723 | 653 |
| t-Butylacrylat | Gew.-Teile | - | 35 | 70 | 140 |
| t-Dodecylmercaptan | Gew.-Teile | 2 | 2 | 2 | 2 |
| Zusatz | | | | | |
| Kaliumperoxodisulfat | Gew.-Teile | 1,2 | 1,2 | 1,2 | 1,2 |
| Wasser | Gew.-Teile | 46,7 | 46,7 | 46,7 | 46,7 |
| Gew.-% tert. Butylacrylat (t-BA) | | 0 | 1,5 | 3 | 6 |

*Na-Salz der disproportionierten Abietinsäure

Beispiele für erfindungsgemäß geeignete Kautschukpolymerisate (Komponente C)

Beispiel C1

Zur Herstellung des Kautschukpolymerisats (C1) werden gemäß den Angaben in der EP 0 134 937 nach dem Verfahren der Emulsionspolymerisation 20 Gew.-Teile Methylmethacrylat auf 80 Gew.-Teile eines grobteiligen Kautschuks mit einem mittleren Teilchendurchmesser der in Latexform vorliegenden Acrylatpfropfgrundlage von 0,5 µm aufgepfropft. Anschließend wird der Latex koaguliert und weitere 14,3 Gew.-Teile Methylmethacrylat aufgepfropft.

Beispiel C2

Es wurde ein mit ca. 0,70 % Maleinsäureanhydrid gepfropfter EPM-Kautschuk (Exxelor VA 1803 der Fa. Esso) eingesetzt.

D.1 Herstellung von Interpolymer 1

Auf einem kontinuierlich arbeitenden Doppelwellenextruder werden in einem Verhältnis von 50 Gew.-Teilen Polyamid A1 und 50 Gew.-Teilen Copolymer B2 aufgeschmolzen und bei Temperaturen von 265-270 °C homogenisiert. (Verweilzeit etwa 2,5 Minuten). Die Drähte werden nach Granulierung üblich getrocknet.

D.2 Herstellung von Interpolymer 2

Auf einem kontinuierlich arbeitenden Doppelwellenextruder werden in einem Verhältnis von 50 Gew.-Teilen Polyamid A1 und 50 Gew.-Teilen Copolymer B3 aufgeschmolzen und bei Temperaturen von 265-270 °C homogenisiert (Verweilzeit etwa 2,5 Minuten) und nach Granulierung üblich getrocknet.

Beispiele für eingesetzte Füll- und Verstärkungsstoffe E)

E1) Glasfaser (Silenka® 8041)
E2) Kaolin

B.1 Herstellung und Prüfung der Formmassen 1-9 (nicht erfindungsgemäß; Vergleiche)

Auf einem kontinuierlich arbeitenden Doppelwellenextruder wurde die Polyamidkomponente A), das thermoplastische Harzcopolymer B) und gegebenenfalls der Kautschuk C aufgeschmolzen und die Komponente E) zudosiert und in der Schmelze homogenisiert. Die Zylindertemperaturen wurden so gewählt, daß die in den Tabellen angegebenen Massetemperaturen eingehalten wurden. Der Schmelzstrang wurde vor dem Austritt aus der Düse entgast, in Wasser abgeleitet, granuliert und getrocknet.

B.2

Zur Herstellung der Prüfstäbe der (erfindungsgemäßen) Versuche 10 bis 13 wurden die Komponenten A), D) und gegebenenfalls C) (in Form von Granulaten) gemischt und unter den in B.1 angegebenen Bedingungen verspritzt. Es wird eine gute Vergleichmäßigung bei Mitverwendung der Komponente D) beobachtet. Die Spritzkörper haben glatte Oberflächen.

Von den Formmassen wurden auf einer üblichen Spritzgußmaschine 80 x 10 x 4 mm Prüfstäbe hergestellt. Geprüft wurden der Biege-E-Modul (DIN 53457), Wärmeformbeständigkeit (Vicat B) (DIN 53 460), die Schlagzähigkeit nach Izod (ISO 180) bei Raumtemperatur, sowie die elektrische Durchschlagfestigkeit nach VDE 0303, Teil 3.

Zur Konditionierung wurden die Proben 32 h im Tropenklima (40 °C, 95 % rel. Luftfeuchte) belassen und anschließend 4 Wochen bei Raumtemperatur gelagert (Ausgleichslagerung).

| | PA | | Harzpolymer | | Kautschuk-polymerisat | | Interpolymer | | Füll- bzw. Verstärkungs-stoffe | |
|---|---|---|---|---|---|---|---|---|---|---|
| | A | | B | | C | | D | | E | |
| | Typ | Gew.-% | Typ | Gew.-% | Typ | Gew.-% | Typ | Gew.-% | Typ | Gew.-% |
| nicht erfindungsgemäß | | | | | | | | | | |
| 1) Vergleich | A1 | 70 | - | - | - | - | - | - | E1 | 30 |
| 2) Vergleich | A1 | 70 | - | - | - | - | - | - | E2 | 30 |
| 3) Vergleich | A1 | 50 | BA | 20 | - | - | - | - | E1 | 30 |
| 4) Vergleich P 37 09 599.4 | A1 | 50 | B1 | 20 | - | - | - | - | E1 | 30 |
| 5) " | A1 | 50 | B2 | 20 | - | - | - | - | E1 | 30 |
| 6) " | A1 | 50 | B3 | 20 | - | - | - | - | E1 | 30 |
| 7) " | A1 | 50 | B3 | 20 | - | - | - | - | E2 | 30 |
| 8) " | A1 | 45 | B3 | 20 | C1 | 5 | - | - | E1 | 30 |
| 9) " | A1 | 45 | B3 | 20 | C2 | 5 | - | - | E1 | 30 |
| erfindungsgemäß | | | | | | | | | | |
| 10) | A2 | 60 | - | - | - | - | D1 | 40 | (A2 enthält 50 Gew.-% E1) | |
| 11) | A2 | 60 | - | - | - | - | D2 | 40 | " | |
| 12) | A2 | 60 | - | - | C1 | 5 | D1 | 35 | " | |
| 13) | A2 | 60 | - | - | C2 | 5 | D1 | 35 | " | |

| Versuchs-Nr. | Biege-E-Modul [MPa] | | $a_n$* (RT) [kJ/m²] | | elektr. Durchschlags-festigkeit [kV/mm] | | |
|---|---|---|---|---|---|---|---|
| | (sf) | (kond) | (sf) | (kond) | (RT) | (70°C) | (100°C) |
| nicht erfindungsgemäß: | | | | | | | |
| 1 | 8250 | 4800 | 75 | 84 | 45,3 | 28,1 | 13,1 |
| 2 | 4650 | 1530 | 82 | 160 | 44,3 | 18,5 | 9,4 |
| 3 | 8600 | 6100 | 34 | 46 | 49,2 | 36,2 | 20,5 |
| 4 | 8530 | 5920 | 37 | 49 | 48,9 | 36,9 | 20,9 |
| 5 | 8480 | 6000 | 40 | 53 | 59,0 | 37,1 | 21,2 |
| 6 | 8300 | 5870 | 45 | 57 | 50,8 | 36,7 | 22,0 |
| 7 | 5040 | 2500 | 35 | 81 | 50,1 | 34,9 | 20,6 |
| 8 | 8050 | 6250 | 55 | 66 | | | |
| 9 | 8310 | 6370 | 64 | 71 | | | |
| erfindungsgemäß: | | | | | | | |
| 10 | 7900 | 6050 | 50 | 76 | 50,3 | 35,9 | 20,5 |
| 11 | 8200 | 6240 | 73 | 85 | 48,7 | 34,3 | 20,0 |
| 12 | 7880 | 5810 | 63 | 75 | | | |
| 13 | 8030 | 5300 | 82 | 88 | | | |

* Schlagzähigkeit nach Izod; RT = Raumtemperatur; sf = spritzfrisch; kond = konditioniert

Im Vergleich zu verstärkten und gefüllten Polyamiden (Versuche 1, 2,) weisen die erfindungsgemäßen Formmassen (Versuche 10 bis 13) verbesserte elektrische Eigenschaften und Steifigkeit, insbesondere im konditionierten Zustand auf; im Vergleich zu entsprechend der P 37 09 599.4 hergestellten Formmassen (Versuche 4 bis 9) zeichnen sich die erfindungsgemäßen Formmassen durch verbesserte Zähigkeit bei guten elektrischen Eigenschaften und hoher Steifigkeit auch nach Konditionierung aus und besitzen

insbesondere glatte Oberflächen.

**Patentansprüche**

**1.** Füllstoffe und/oder Verstärkungsstoffe enthaltende thermoplastische Formmassen mit verbesserter Oberfläche und verbesserten mechanischen oder elektrischen Eigenschaften aus

A) mindestens 10 Gew.-% eines teilkristallinen oder amorphen Polyamid A) welches 10 bis 65 Gew.-% Füll- und/oder Verstärkungsstoffe E) enthält,

D) 10 bis 60 Gew.-% Interpolymer D) sowie

C) 0 bis 30 Gew.-%, bezogen auf die Summe (A + C + D), an Kautschukpolymerisaten als schlagzähe Modifikatoren,

wobei die Interpolymeren D) aus

A) 40 bis 80 Gew.-% teilkristallinen oder amorphen Polyamiden und

B) 20 bis 60 Gew.-% thermoplastischen Copolymerisaten oder Gemischen aus mehreren thermoplastischen Copolymerisaten aus

B1) mindestens 15 Gew.-% wenigstens einem Monomer aus der Reihe

B1.1) der Styrole und α-Methylstyrole, die auch alkyl-, halogenalkyl- und/oder halogensubstituiert sein können

und gegebenenfalls

B1.2) 0 bis 50 Gew.-% an weiteren Monomeren aus der Reihe Acrylnitril, Methacrylnitril, der Vinyl-$C_1$-$C_4$-carbonsäuren und Ester der Acryl- oder Methacrylsäuren mit primären oder sekundären $C_1$-$C_{10}$-Alkoholen,

und

B2) 0,5 bis 35 Gew.-% wenigstens einem Ester der Acryl- oder Methacrylsäure mit tertiären $C_4$-$C_{10}$-Alkoholen

hergestellt durch Homogenisieren der Komponenten A) und B) in der Schmelze in üblichen Misch- oder Knetorganen bei Temperaturen oberhalb des Schmelzpunktes der höherschmelzenden Komponente bis zur Bildung der Interpolymeren, bestehen.

**2.** Formmassen nach Anspruch 1, dadurch gekennzeichnet, daß der Anteil an Interpolymer D) 20 bis 60 Gew.-% beträgt.

**3.** Formmassen nach Anspruch 1 und 2, dadurch gekennzeichnet, daß die Polyamide A) 15 bis 60 Gew.-% an Füll- und/oder Verstärkungsstoffen E) enthalten.

**4.** Formmassen nach Ansprüchen 1 bis 3, dadurch gekennzeichnet, daß sie 5 bis 20 Gew.-% an Kautschukpolymerisaten als Schlagzähmodifikatoren enthalten.

**5.** Formmassen nach Ansprüchen 1 bis 4, dadurch gekennzeichnet, daß sie aus 25 bis 75 Gew.-% Polyamid A), welches 15 bis 60 Gew.-%, bezogen auf das Polyamid A) an Füll- und/oder Verstärkungsstoffen E) enthält, D) 20 bis 60 Gew.-% Interpolymer D) sowie 5 bis 15 Gew.-% an Kautschukpolymerisaten C) besteht.

**6.** Formmassen nach Ansprüchen 1 bis 5, dadurch gekennzeichnet, daß das Interpolymer D) aus 50 bis 75 Gew.-% teilkristallinen Polyamiden und 25 bis 50 Gew.-% thermoplastischen Copolymerisaten B1 und B2 besteht.

**7.** Formmassen nach Ansprüchen 1 bis 6, dadurch gekennzeichnet, daß im Interpolymer D) das thermoplastische Copolymerisat aus mindestens 30 Gew.-% Styrol und 20 bis 40 Gew.-% an weiteren Monomeren aus der Reihe Acrylnitril, Methacrylnitril, der Vinyl-$C_1$-$C_4$-carbonsäuren und Ester der Acryl- oder Methacrylsäure mit primären oder sekundären $C_1$-$C_{10}$-Alkoholen und B2) 1,5 bis 15 Gew.-% wenigstens einem Ester der Acryl- oder Methacrylsäure mit tertiären $C_4$-$C_{10}$-Alkoholen besteht.

**8.** Verfahren zur Herstellung der Füllstoffe und/oder Verstärkungsstoffe enthaltenden thermoplastischen Formmassen mit verbesserter Oberfläche und verbesserten mechanischen oder elektrischen Eigenschaften aus mindestens 10 Gew.-% Polyamid, welches 15 bis 60 Gew.-% bezogen auf Polyamid A) Füll- und/oder Verstärkungsstoffe enthält,

D) 10 bis 60 Gew.-% Interpolymer D) sowie 0 bis 30 Gew.-% an Kautschukpolymerisaten C) als

Schlagzähmodifikatoren, wobei die Interpolymeren D) aus

A) 40 bis 80 Gew.-% teilkristallinen oder amorphen Polyamiden und

B) 20 bis 60 Gew.-% thermoplastischen Copolymerisaten oder Gemischen aus mehreren thermoplastischen Copolymerisaten aus

B1) mindestens 15 Gew,-% wenigstens einem Monomer aus der Reihe

B1.1) der Styrole und α-Methylstyrole, die auch alkyl-, halogenalkyl- und/oder halogensubstituiert sein können

und gegebenenfallS

B1.2) 0 bis 50 Gew`-% an weiteren Monomeren aus der Reihe Acrylnitril, Methacrylnitril, der Vinyl-$C_1$-$C_4$-carbonsäuren und Ester der Acryl- oder Methacrylsäuren mit primären oder sekundären $C_1$-$C_{10}$-Alkoholen,

und

B2) 0,5 bis 35 Gew.-% wenigstens einem Ester der Acryl- oder Methacrylsäure mit tertiären $C_4$-$C_{10}$-Alkoholen in Mengen bis zu 35 Gew.-% B2) im Copolymerisat B),

hergestellt durch Homogenisieren der Komponenten A) und B) in der Schmelze in üblichen Misch- oder Knetorganen bei Temperaturen oberhalb des Schmelzpunktes der höherschmelzenden Komponente bis zur Bildung der Interpolymeren, bestehen, dadurch gekennzeichnet, daß man die Komponenten A), D) und gegebenenfalls C), vorzugsweise als Granulate, in üblichen Mischaggregaten, vorzugsweise ohne weitere Compoundierungsschritte, zu Formkörpern verspritzt.

## Claims

**1.** Filled and/or reinforced thermoplastic moulding compounds having an improved surface and improved mechanical or electrical properties of

A) at least 10% by weight of a partly crystalline or amorphous polyamide A) which contains from 10 to 65% by weight fillers and/or reinforcing materials E),

D) 10 to 60% by weight interpolymers D) and

C) 0 to 30% by weight based, on the sum of (A + C + D), of rubber polymers as high impact modifiers,

the interpolymers D) consisting of

A) 40 to 80% by weight of partly crystalline or amorphous polyamides and

B) 20 to 60% by weight of thermoplastic copolymers or mixtures of several thermoplastic copolymers of

B1) at least 15% by weight of at least one monomer from the group consisting of

B1.1) styrenes and α-methylstyrenes which may also be alkyl-, haloalkyl- and/or halogen-substituted

and, optionally,

B1.2) 0 to 50% by weight of other monomers from the group consisting of acrylonitrile, methacrylonitrile, vinyl-$C_{1-4}$-carboxylic acids and esters of acrylic or methacrylic acids with primary or secondary $C_{1-10}$ alcohols,

and

B2) 0.5 to 35% by weight of at least one ester of acrylic or methacrylic acid with tertiary $C_{4-10}$ alcohols,

prepared by homogenzation of components A) and B) in the melt in standard mixing or kneading units at temperatures above the melting point of the higher-melting component until the interpolymers are formed.

**2.** Moulding compounds as claimed in claim 1, characterized in that the percentage content of interpolymer D) is 20 to 60% by weight.

**3.** Moulding compounds as claimed in claims 1 and 2, characterized in that the polyamides A) contain 15 to 60% by weight of fillers and/or reinforcing materials E).

**4.** Moulding compounds as claimed in claims 1 to 3, characterized in that they contain 5 to 20% by weight of rubber polymers as high-impact modifiers.

**5.** Moulding compounds as claimed in claims 1 to 4, characterized in that they consist of 25 to 75% by weight polyamide A) containing 15 to 60% by weight, based on polyamide A), of fillers and/or

reinforcing materials E), 20 to 60% by weight interpolymer D) and 5 to 15% by weight rubber polymers C).

6. Moulding compounds as claimed in claims 1 to 5, characterized in that the interpolymer D) consists of 50 to 75% by weight partly crystalline polyamides and 25 to 50% by weight thermoplastic copolymers B1 and B2.

7. Moulding compounds as claimed in claims 1 to 6, characterized in that the thermoplastic copolymer in the interpolymer D) consists of at least 30% by weight styrene and 20 to 40% by weight of other monomers from the group consisting of acrylonitrile, methacrylonitrile, vinyl-$C_{1-4}$-carboxylic acids and esters of acrylic or methacrylic acid with primary or secondary $C_{1-10}$ alcohols and B2) 1.5 to 15% by weight of at least one ester of acrylic or methacrylic acid with tertiary $C_{4-10}$ alcohols.

8. A process for the production of the filled and/or reinforced thermoplastic moulding compounds having an improved surface and improved mechanical or electrical properties of at least 10% by weight polyamide containing 15 to 60% by weight, based on polyamide A), of fillers and/or reinforcing materials, D) 10 to 60% by weight interpolymer D) and 0 to 30% by weight rubber polymers C) as high-impact modifiers, the interpolymers D) being prepared from
   A) 40 to 80% by weight partly crystalline or amorphous polyamides and
   B) 20 to 60% by weight thermoplastic copolymers or mixtures of several thermoplastic copolymers of
      B1) at least 15% by weight of at least one monomer from the group consisting of
         B1.1) styrenes and α-methylstyrenes which may even be alkyl-, haloalkyl- and/or halogen-substituted
         and, optionally,
         B1.2) 0 to 50% by weight of other monomers from the group consisting of acrylonitrile, methacrylonitrile, vinyl-$C_{1-4}$-carboxylic acids and esters of acrylic or methacrylic acids with primary or secondary $C_{1-10}$ alcohols,
      and
      B2) 0.5 to 35% by weight of at least one ester of acrylic or methacrylic acid with tertiary $C_{4-10}$ alcohols in quantities of up to 35% by weight B2) in the copolymer B),

   prepared by homogenization of components A) and B) in the melt in standard mixing or kneading machines at temperatures above the melting point of the higher-melting component until the interpolymers are formed, characterized in that components A), D) and, optionally, C), preferably in the form of granules, are extruded to form mouldings in standard mixing units, preferably without any further compounding steps.

**Revendications**

1. Mélanges à mouler thermoplastiques contenant des charges et/ou des substances de renforcement, à surface améliorée et doués de très bonnes propriétés mécaniques ou électriques, constitués
   A) d'au moins 10 % en poids d'un polyamide A) partiellement cristallin ou amorphe qui contient 10 à 65 % en poids de charges et/ou de substances de renforcement E),
   D) de 10 à 60 % en poids d'interpolymère D) ainsi que
   C) de 0 à 30 % en poids, par rapport à la somme (A + C + D), de polymères du type caoutchouc comme modificateurs de résistance au choc,

   les interpolymères D) étant constitués
   A) de 40 à 80 % en poids de polyamides partiellement cristallins ou amorphes et
   B) de 20 à 60 % en poids de copolymères thermoplastiques ou de mélanges de plusieurs copolymères thermoplastiques formés
      B1) d'au moins 15 % en poids d'au moins un monomère de la série
         B1.1) des styrènes et des α-méthylstyrènes qui peuvent aussi porter des substituants alkyle, halogén-alkyle et/ou halogéno
         et, le cas échéant
         B1.2) de 0 à 50 % en poids d'autres monomères de la série acrylonitrile, méthacrylonitrile, acides vinylcarboxyliques en $C_1$ à $C_4$ et esters d'acides acryliques ou méthacryliques d'alcools primaires ou secondaires en $C_1$ à $C_{10}$,
      et

B2) de 0,5 à 35 % en poids d'au moins un ester d'acide acrylique ou d'acide méthacrylique avec des alcools tertiaires en $C_4$ à $C_{10}$,

préparés par homogénéisation des composants A) et B) à l'état fondu dans des organes mélangeurs ou malaxeurs classiques à des températures au-dessus du point de fusion du composant de plus haut point de fusion jusqu'à la formation des interpolymères.

**2.** Mélanges à mouler suivant la revendication 1, caractérisés en ce que la proportion d'interpolymère D) s'élève à 20-60 % en poids.

**3.** Compositions à mouier suivant les revendications 1 et 2, caractérisées en ce que les polyamides A) contiennent 15 à 60 % en poids de charges et/ou de matières de renforcement E).

**4.** Compositions à mouler suivant les revendications 1 à 3, caractérisées en ce qu'elles contiennent 5 à 20 % en poids de polymères du type caoutchouc comme modificateurs de résistance au choc.

**5.** Mélanges à mouier suivant les revendications 1 à 4, caractérisés en ce qu'ils sont constitués de 25 à 75 % en poids de polyamide A) qui contient 15 à 60 % en poids, par rapport au polyamide A), de charges et/ou de matières de renforcement E), D) 20 à 60 % en poids d'interpolymère D) ainsi que 5 à 15 % en poids de polymères C) du type caoutchouc.

**6.** Compositions à mouier suivant les revendications 1 à 5, caractérisées en ce que l'interpolymère D) est constitué de 50 à 75 % en poids de polyamides partiellement cristallins et de 25 à 50 % en poids de copolymères thermoplastiques B1 et B2.

**7.** Compositions à mouier suivant les revendications 1 à 6, caractérisées en ce que dans i'interpolymère D), le copolymère thermoplastique est constitué d'au moins 30 % en poids de styrène et de 20 à 40 % en poids d'autres monomères de la série acrylonitrile, méthacrylonitrile, acides vinyl-carboxyliques en $C_1$ à $C_4$ et esters d'acide acrylique ou d'acide méthacrylique avec des alcools primaires ou secondaires en $C_1$ à $C_{10}$ et B2) de 1,5 à 15 % en poids d'au moins un ester de l'acide acrylique ou de l'acide méthacrylique avec des alcools tertiaires en $C_4$ à $C_{10}$.

**8.** Procédé de production de mélanges à mouler thermoplastiques contenant des charges et/ou des matières de renforcement de surfaces améliorées et doués de très bonnes propriétés mécaniques ou électriques à partir d'au moins 10 % en poids d'un polyamide qui contient 15 à 60 % en poids, par rapport au polyamide A), de charges et/ou de matières de renforcement, D) de 10 à 60 % en poids d'interpolymère D) ainsi que de 0 à 30 % en poids de polymères C) du type caoutchouc comme modificateurs de résistance au choc, les interpolymères D) étant constitués

A) de 40 à 80 % en poids de polyamides partiellement cristallins ou amorphes et

B) de 20 à 60 % en poids de copolymères thermoplastiques ou de mélanges de plusieurs copolymères thermoplastiques formés

B1) d'au moins 15 % en poids d'au moins un monomère de la série

B1.1) des styrènes et des $\alpha$-méthylstyrènes qui peuvent être substitués également par des radicaux alkyle, halogénalkyle et/ou halogéno

et, le cas échéant

B1.2) de 0 à 50 % en poids d'autres monomères de la série de l'acrylonitrile, du méthacrylonitrile, des acides vinyl-carboxyliques en $C_1$ à $C_4$ et des esters d'acides acryliques ou méthacryliques avec des alcools primaires ou secondaires en $C_1$ à $C_{10}$,

et

B2) de 0,5 à 35 % en poids d'au moins un ester d'acide acrylique ou d'acide méthacrylique avec des alcools tertiaires en $C_4$ à $C_{10}$ en quantités allant jusqu'à 35 % en poids de B2) dans le copolymère B),

préparés par homogénéisation des composants A) et B) à l'état fondu dans des organes mélangeurs ou malaxeurs classiques à des températures au-dessus du point de fusion du composant de plus haut point de fusion jusqu'à la formation des interpolymères, caractérisé en ce qu'on injecte sous forme d'un corps façonné les composants A), D) et, le cas échéant, C), de préférence en granules, dans des appareils mélangeurs classiques, de préférence sans autres étapes de formulation.